# EUROPEAN PATENT APPLICATION

(11) **EP 2 228 588 A2**
(43) Date of publication of application: **15.09.2010**
(21) Application number: 10152084.9
(22) Date of filing: 29.01.2010
(51) Int. Cl.: F21S 8/00

(54) **Vehicle headlamp**

(30) Priority: 13.03.2009 JP 2009060951
(71) Applicant: Koito Manufacturing Co., Ltd., Tokyo 108-8711 (JP)
(72) Inventor: Fujiyoshi, Takatomo, Shizuoka Shizuoka (JP)
(74) Representative: Finnie, Peter John

(57) **Abstract**

The present invention relates to a vehicle headlamp (1). The headlamp (1) comprises a light source (11), a projection lens (9) disposed in front of the light source (11), a reflector (10) which reflects light emitted from the light source (11) toward the projection lens (9), a first shade (21), a second shade (22), first actuating means (34) for rotating the first shade (21) between a far zone irradiating position and a near zone irradiating position, second actuating means (43, 44, 45, 46, 47) for rotating the second shade (22) between a first shielding position and a second shielding position, and a support shaft (20) on which the first shade (21) and the second shade (22) are rotatably supported. The first shade (21) and the second shade (22) are rotatable about the support shaft (20) independently from each other. Therefore, the shades (21, 22) are smoothly operated with a simplified configuration.

## Description

The present invention relates to a vehicle headlamp having a first shade and a second shade which are rotatable respectively to change a light distribution pattern.

Some vehicle headlamps are configured such that a lamp unit having a light source is arranged inside a lamp housing. The lamp housing includes a lamp body having a front opening and a front cover attached to the lamp body to cover the front opening.

For example, JP 2008-027768 A discloses a vehicle headlamp, a lamp unit of which including a light source, a projection lens disposed in front of the light source, a reflector which reflects light emitted from the light source toward the projection lens to forwardly project the light therethrough, and a light distribution switching mechanism disposed between the light source and the projection lens.

The light distribution pattern switching mechanism has a first shade and a second shade. The first shade is supported rotatably on a first support shaft, and the second shade is supported rotatably on a second support shaft. The second support shaft is a separate component from the first support shaft, and is provided on the first shade.

The first shade is configured to switch a light distribution pattern between, for example, a high beam light distribution pattern for irradiating a far zone and a low beam light distribution pattern for irradiating a near zone. The second shade is configured to switch the light distribution pattern, for example, from a right-hand traffic light distribution pattern to a light distribution pattern suitable for a left-hand traffic.

As described above, the second support shaft, on which the second shade is supported, is provided on the first shade. Therefore, when rotating the first shade, the second shade also becomes a load against a driving force of a shade actuator, which may adversely affect a smooth operation of the shades.

Illustrative aspects of the present invention provide a vehicle headlamp in which shades are smoothly operated with a simplified configuration.

According to an illustrative aspect of the present invention, a vehicle headlamp is provided. The vehicle headlamp comprises a light source, a projection lens disposed in front of the light source to forwardly project light emitted from the light source, a reflector which reflects the light emitted from the light source toward the projection lens, a first shade, and a second shade. The first shade comprises a first shielding wall which partially shields the light emitted from the light source. The first shade is rotatable between a far zone irradiating position for irradiating a far zone and a near zone irradiating position for irradiating a near zone. The second shade comprises a second shielding wall. The second shade is rotatable between a first shielding position and a second shielding position to partially shield the light emitted from the light source in different ways with the second shielding wall. The vehicle headlamp further comprises first actuating means for rotating the first shade between the far zone irradiating position and the near zone irradiating position, second actuating means for rotating the second shade between the first shielding position and the second shielding position, and a support shaft on which the first shade and the second shade are rotatably supported. The first shade and the second shade are rotatable about the support shaft independently from each other. Namely, the first shade and the second shade are mounted on the same support shaft, but are rotated by different actuating means.

Other aspects and advantages of the present invention will be apparent from the following description, the drawings and the claims.

Hereinafter, an exemplary embodiment of the present invention will be described in detail with reference to the drawings including:
Fig. 1: a schematic vertical sectional view of a vehicle headlamp according to an exemplary embodiment of the present invention;
Fig. 2: an exploded front perspective view of a light distribution pattern switching mechanism of the headlamp of Fig. 1;
Fig. 3: a rear perspective view of the light distribution pattern switching mechanism;
Fig.4: another rear perspective view of the light distribution pattern switching mechanism, in which a first shade is in a near zone irradiating position and a second shade in a second shielding position;
Fig. 5: a schematic enlarged sectional view, illustrating the first shade and the second shade of Fig. 4;
Fig. 6: yet another rear perspective view of the light distribution pattern switching mechanism, in which the first shade is in a far zone irradiating position and the second shade in the second shielding position.
Fig. 7: a schematic enlarged sectional view, illustrating the first shade and the second shade of Fig. 6;
Fig. 8: yet another rear perspective view of the light distribution pattern switching mechanism, in which the first shade is in the near zone irradiating position and the second shade in a first shielding position;
Fig. 9: a schematic enlarged sectional view, illustrating the first shade and the second shade of Fig. 8;
Fig. 10: yet another rear perspective view of the light distribution pattern switching mechanism, in which the first shade is rotated to be in the far zone irradiating position and the second shade is rotated together with the first shade to be in the second shielding position;
Fig. 11: a schematic enlarged sectional view, illustrating the first shade and the second shade of Fig. 10;
Fig. 12: a perspective view of another example of second actuating means; and
Fig. 13: a perspective view of yet another example of the second actuating means.

A vehicle headlamp 1 according to the exemplary embodiment is one of headlamps that are mounted on right and left portions of a front end of a vehicle body respectively.

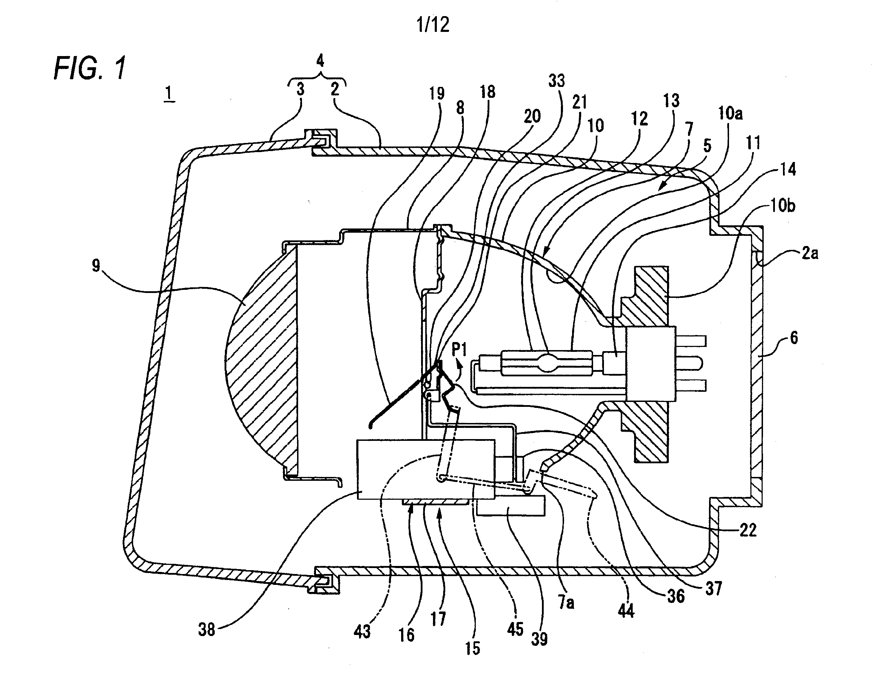

As shown in Fig. 1, the vehicle headlamp 1 includes a recessed lamp body 2 having a front opening and a cover 3 which covers the opening of the lamp body 2 to form a lamp housing 4 together with the lamp body 2. The housing 4 has a lamp chamber 5 thereinside.

A mounting hole 2a is formed through a rear end portion of the lamp body 2 so as to penetrate therethrough in a front-rear direction. A back cover 6 is attached to the rear end portion of the lamp body 2 to close the mounting hole 2a.

A lamp unit 7 is disposed inside the lamp chamber 5. The lamp unit 7 includes a lens holder 8, a projection lens 9 attached to a front end portion of the lens holder 8, a reflector 10 attached to a rear end portion of the lens holder 8, and a light source 11 I attached to a rear end portion of the reflector 10.

The lamp unit 7 is supported by the lamp body 2 via an optical axis adjusting mechanism, which is not shown. The optical axis adjusting mechanism is operable to relatively move the lamp unit 7 with respect to the lamp body 2 in up and down directions and in right and left directions so as to implement an adjustment (an aiming adjustment or a leveling adjustment) of an optical axis of light emitted from the light source 11.

In addition, the lamp unit 7 is swivelable in the right and left directions relative to the light housing 4 by a swiveling adjustment mechanism, which is also not shown.

More specifically, a swivel actuator, which is not shown, is disposed below the lamp unit 7 in the lamp chamber 5, and a coupling shaft is provided to coupled the swivel actuator and a lower end portion of the lamp unit 7. In accordance with a driving force of the swivel actuator, the lamp unit 7 is swiveled via the coupling shaft in the right and left directions relative to the lamp housing 4.

This swiveling of the lamp unit 7 is linked with a steering operation of the vehicle.

The projection lens 9 has a convex front surface and a flat rear surface which faces rearward. The projection lens 9 inverts and forwardly projects an image formed on a focal plane, which includes a rear focal point of the projection lens 9, when light is emitted from the light source 11.

An inner surface of a primary portion of the reflector 10 other than the rear end portion is configured as a reflecting surface 10a. A primary portion of the reflecting surface 10a other than a front end portion is configured to have an ellipsoidal form. More specifically, the projection lens 9, the reflector 10 and the light source 11 are configured and arranged such that a first focal point of the reflecting surface 10a coincides with a light emitting portion 13 of the light source 11 and such that a second focal point of the reflecting surface 10a coincides with the rear focal point of the projection lens 9. The rear end portion of the reflector 10 is configured as a cylindrical mounting portion 10b.

The light source 11 is, for example, a discharge bulb, and emits light from the light emitting portion 13 inside an outer tube 12. A rear end portion of the outer tube 12 is held by a base portion 14. The base portion 14 is mounted in the mounting portion 10b at the rear end portion of the reflector 10.

The lower end portion of the lamp unit 7 is formed with an arranging hole 7a between the lens holder 8 and the reflector 10.

When a voltage is applied to the light source 11 from a lighting circuit, which is not shown, the light emitting portion 13 emits light. The light from the light emitting portion 13 is partially directed forward and partially reflected by the reflecting surface 10a of the reflector 10, so as to be converged onto the focal plane of the projection lens 9 which includes the rear focal point of the projection lens 9, and is forwardly projected through the projection lens 9 as irradiation light.

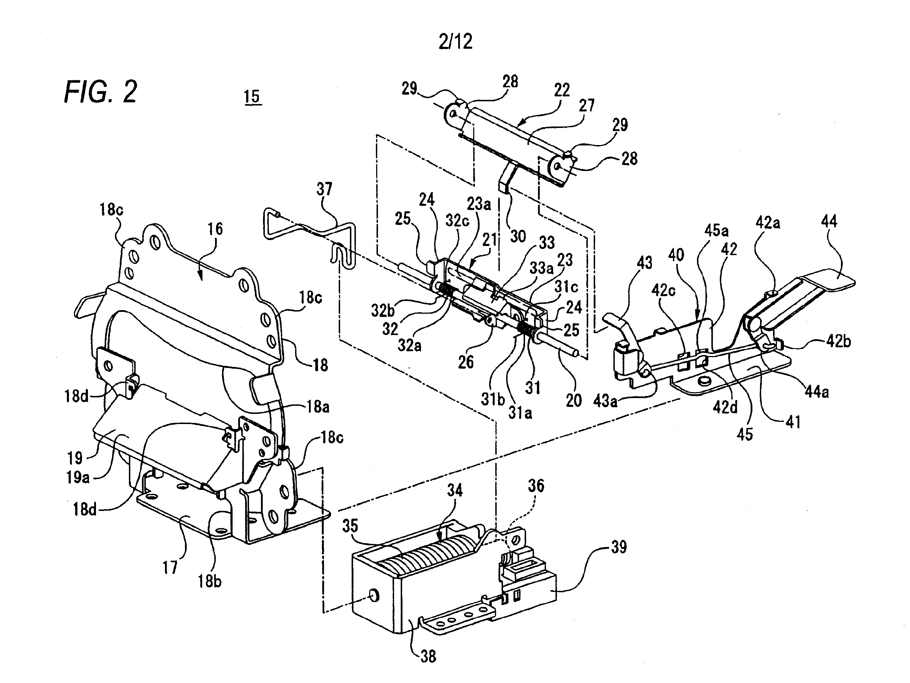

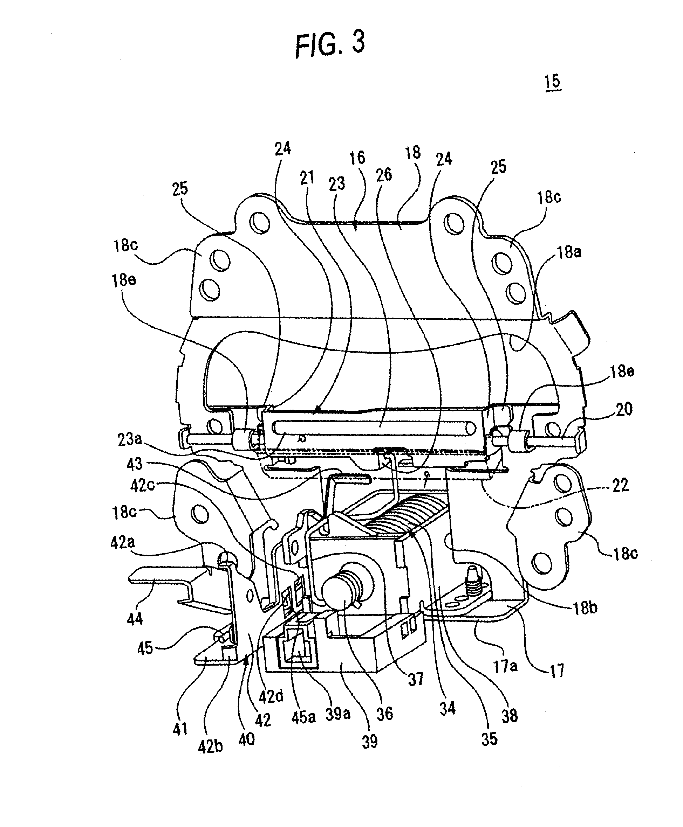

Inside the lamp unit 7, a light distribution pattern switching mechanism 15 is disposed between the projection lens 9 and the light source 11. As shown in Figs. 2 and 3, the light distribution pattern switching mechanism 15 has a base plate 16 on which other components of the light distribution pattern switching mechanism 15 are arranged and/or supported.

The base plate 16 has a horizontal wall 17, which primarily faces up and down directions, and a vertical wall 18, which primarily faces front and rear directions. The vertical wall 18 extends upward from a front edge of the horizontal wall 17. The horizontal wall 17 has an L-shaped cutout portion 17a.

The vertical wall 18 has a light passage aperture 18a and a disposing hole 18b which are continuously formed in the vertical direction. Further, the vertical wall 18 has a plurality of attaching portions 18c, a pair of spring supporting portions 18d, and a pair of shaft supporting portions 18e. The attaching portions 18c are provided along an outer circumferential portion of the vertical wall 18 so as to be spaced apart from each other in a circumferential direction. The spring supporting portions 18d are provided on an opening edge of the light passage aperture 18a so as to be spaced apart from each other in a right-left direction. The shaft supporting portions 18e are provided on a rear side of the vertical wall 18 so as to be spaced apart from each other in the right-left direction.

The light passage aperture 18a is provided to allow the light from the light source 11 to travel therethrough toward the projection lens 9.

The base plate 16 is attached to the rear end portion of the lens holder 8 at the attaching portions 18c of the vertical wall 18.

A light blocking member 19 is attached to a front surface of the vertical wall 18. The light blocking member 19 has a sloped surface 19a which is downwardly inclined as it extends toward the front of the headlamp 1. The light blocking member 19 is provided to block an unnecessary part of the light from the light source 11 that is directed below the light passage aperture 18a.

A support shaft 20, which extends in the right-left direction, is supported on the shaft supporting portions 18e of the vertical wall 18, and is positioned behind the vertical wall 18. A first shade 21 and a second shade 22 are rotatably supported on the support shaft 20, respectively.

The first shade 21 is configured to switch a light distribution pattern between, for example, a high beam light distribution pattern for irradiating a far zone and a low beam light distribution pattern for irradiating a near zone. The second shade 22 is configured to switch the light distribution patterns, for example, from a right-hand traffic light distribution pattern to a light distribution pattern suitable for a left-hand traffic.

The first shade 21 is rotated between a near zone irradiating position (a frontmost position) for irradiating the near zone and a far zone irradiating position (a rearmost position) for irradiating the far zone. The first shade 21 partially shields the light emitted from the light source 11.

The second shade 22 is rotated between a first shielding position (a frontmost position) and a second shielding position (a rearmost position). The second shade 22 also partially shields the light emitted from the light source 11 but in a different manner from the first shade 21.

The first shade 21 includes a first shielding wall 23 which extends in the right-left direction, a pair of side walls 24 which protrude from right and left sides of the first shielding wall 23 respectively in the same direction perpendicular to the first shielding wall 23, a pair of stoppers 25 which outwardly protrude from distal ends of the side walls 24 respectively, and an engaging portion 26 which forwardly protrude from a lower edge of the first shielding wall 23. The first shielding wall 23, the side walls 24, the stoppers 25, and the engaging portion 26 are formed as a one-piece structure. A pushing ridge 23a is formed on the first shielding wall 23 so as to extend in the right-left direction. The pushing ridge 23a is pressed out so as to convexly protrude toward the rear of the headlamp 1.

The side walls 24 of the first shade 21 are supported on the support shaft 20.

The second shade 22 includes a second shielding wall 27 which extends in the right-left direction, a pair of side walls 28 which protrude from right and left sides of the second shielding wall 27 respectively in the same direction perpendicular to the second shielding wall 27, a pair of stoppers 29 which outwardly protrude from distal ends of the side walls 28 respectively, and an engaging protrusion 30 which is downwardly extend from a lower edge of the second shielding wall 27. The second shielding wall 27, the side walls 28, the stoppers 29, and the engaging protrusion 30 are formed as a one-piece structure.

The side walls 28 of the second shade 22 are also supported on the same support shaft 20.

The second shade 22 is configured and arranged such that the second shielding wall 27 is positioned behind the first shielding wall 23 of the first shade 21 so as to partially overlap with the first shielding wall 23 in the front-rear direction, and such that the side walls 28 are positioned just outside the side walls 24 of the first shade 21.

A first torsion coil spring 31 (first biasing means) is attached on the support shaft 20. The first torsion coil spring 31 is positioned just on the right from the left side wall 24 of the first shade 21.

The first torsion coil spring 31 has a coiled portion 31a and coupling portions 31b, 31c which extends from respective ends of the coiled portion 31a. The coiled portion 31a is supported on the support shaft 20 such that the support shaft 20 is inserted through the coiled portion 31a, the coupling portion 31b is coupled to one of the spring supporting portions 18d of the base plate 16, and the other coupling portion 31c is coupled to the first shielding wall 23 of the first shade 21.

The first torsion spring 31 biases the first shade 21 in a direction P1 around the support shaft 20 (see Fig. 1), i.e., in a direction from the far zone irradiating position toward the near zone irradiating position. The stoppers 25 of the first shade 21 are pressed against a rear surface of the vertical wall 18 of the base plate 16 by means of a biasing force of the first torsion coil spring 31, whereby the first shade 21 is held in the near zone irradiating position. Therefore, a rotating operation of the first shade 21 from the near zone irradiating position to the far zone irradiating position is carried out against the biasing force of the first torsion coil spring 31.

A second torsion coil spring 32 (second biasing means) is also supported on the support shaft 20. The second torsion coil spring 32 is positioned just on the left from the right side wall 24 of the first shade 21.

The second torsion coil spring 32 has a coiled portion 32a and coupling portions 32b, 32c which extend from respective ends of the coiled portion 31 a. The coiled portion 32a is supported on the support shaft 20 such that the support shaft 20 is inserted through the coiled portion 32a, the coupling portion 32b is coupled to the other spring supporting portion 18d of the base plate 16, and the other coupling portion 32c is supported on the second shielding wall 27 of the second shade 22.

The second torsion spring 32 biases the second shade 22 in the direction P1 around the support shaft 20 (see Fig. 1), i.e., in a direction from the second shielding position to the first shielding position. The stoppers 29 are pressed against rear surfaces of the stoppers 25 of the first shade 21 respectively by means of a biasing force of the second torsion coil spring 32, whereby the second shade 22 is held in the second shielding position. Therefore, a rotating operation of the second shade 22 from the first shielding position to the second shielding position is carried out against the biasing force of the second torsion coil spring 32.

An auxiliary light blocking member 33 is attached to a front side of the first shade 21. The auxiliary light blocking member 33 has a sloped surface 33a which is downwardly inclined as it extends toward the front of the headlamp 1. The auxiliary light blocking member 33 is provided to block an unnecessary part of the light from the light source 11 that is directed below the light passage aperture 18a. The auxiliary light blocking member 33 is rotated together with the first shade 21. When the first shade 21 is at the near zone irradiating position, the sloped surface 33a becomes flush with the sloped surface 19a of the light blocking member 19.

A solenoid 34 (first actuating means) is disposed on the horizontal wall 17 of the base plate 16 to rotate the first shade 21. The solenoid 34 has an electromagnetic coil 35 and a plunger 36 which moves in the front and rear directions depending on energizing condition of the electromagnetic coil 35.

A rear end portion of the plunger 36 is rearwardly protruded out from the electromagnetic coil 35, and is coupled to the engaging portion 26 of the first shade 21 via a link member 37 which may be formed from a wire. Consequently, when the plunger 36 is moved in the front and rear directions, the link member 37 is also moved in the front and rear directions, whereby the first shade 21 is rotated about the support shaft 20.

The solenoid 34 is held inside a case 38. The case 38 is mounted on an upper surface of the horizontal wall 17 of the base plate 16 such that a part of the case 38 protrudes out to the front from the disposing hole 18b of the vertical wall 18. A connector case 39 is attached to a rear end portion of the case 38. A connector portion 39a is provided in the connector case 39. To the connector portion 39a, a power cord, which is not shown, is connected to supplying electric power to the electromagnetic coil 35.

When the case 38 is attached to the horizontal wall 17, the connector 39 is positioned to fit the cutout portion 17a of the horizontal wall 17.

On the upper surface of the horizontal wall 17 of the base plate 16, a supporting member 40 is also mounted. The supporting member 40 includes an attaching base 41, which primarily faces the up and down directions, and a supporting wall 42 which upwardly extends from the attaching base 41. The supporting member 40 is mounted on the horizontal wall 17 at the attaching base 41.

A first stopper 42a and a second stopper 42b are provided so as to protrude to the left from a rear end portion of the supporting wall 42 respectively. The first stopper 42a and the second stopper 42b are spaced apart from each other in the up-down direction. Further, a first locking hole 42c and a second locking hole 42d are formed in a central area of the supporting wall 42 in the front-rear direction so as to penetrate the supporting wall 42 in the right-left direction. The first locking hole 42c and the second locking hole 42d are spaced apart from each other in the front-rear direction.

On a front end portion of the supporting wall 42 of the supporting member 40, an operating member 43 is rotatably supported. The operating member 43 is configured and arranged to extend in the up-down direction, and is rotated such that an upper end portion of the operating member 43 moves in the front and rear directions. A coupling protrusion 43a is provided at a lower end portion of the operating member 43 so as to downwardly extend from a rotation center of the operating member 43a.

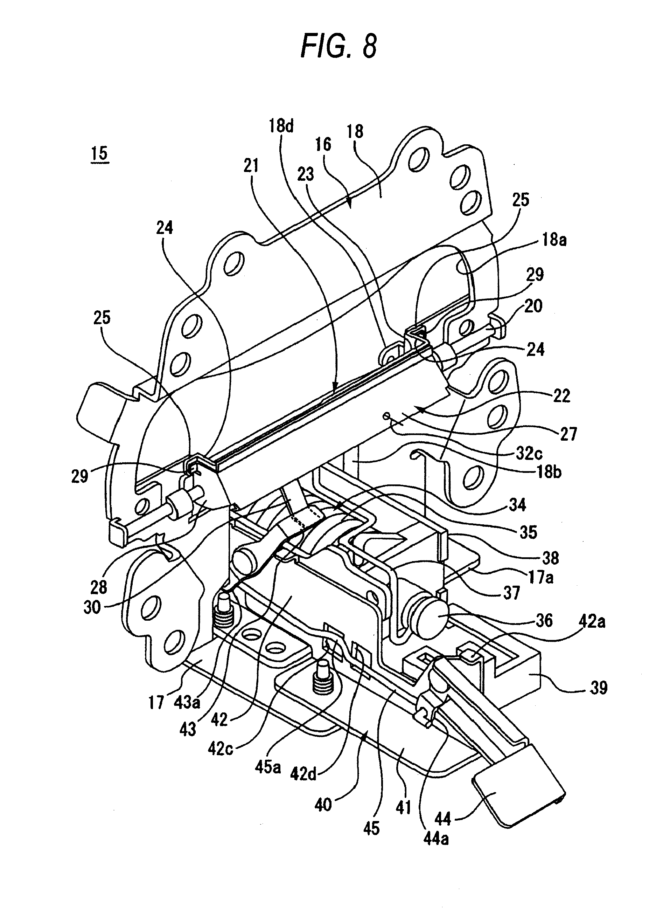

As described above, the second shade 22 is biased by the second torsion coil spring 32 in the direction in which it moves from the second shielding position to the first shielding position. Due to this biasing force of the second torsion coil spring 32, a distal end portion of the engaging protrusion 30 of the second shade 22 is pressed against a front side edge of the operating member 43 from the front (see Fig. 8).

On a rear end portion of the supporting wall 42 of the supporting member 40, an operation lever 44 is rotatably supported. The operation lever 44 is configured and arranged to extend in the front-rear direction, and a front end portion thereof is supported on the supporting wall 42. A coupling protrusion 44a is provided at the front end portion of the operation lever 44 so as to downwardly extend from a rotation center of the operation lever 44.

An operating range of the operating lever 44 is restricted by the first stopper 42a and the second stopper 42b of the supporting wall 42.

The coupling protrusion 43a of the operating member 43 and the coupling protrusion 44a of the operation lever 44 are coupled together via a link member 45 which may be formed from a wire. A central portion of the link member 45 is formed with a locking protrusion 45a which protrudes rightward. At least a rear end portion of the operation lever 44 is protruded toward the rear of the lamp unit 7 through the arranging hole 7a of the lamp unit 7 (see Fig. 1).

When the operation lever 44 is rotated, the link member 45 moves in the front and rear directions in accordance with the rotation of the operation lever 44, whereby the operating member 43 is rotated. Further, the engaging protrusion 30 is operated in accordance with the rotation of the operating member 43, so that the second shade 22 is rotated on the support shaft 20. Consequently, the operating member 43, the operation lever 44 and the link member 45 serve as second actuating means for rotating the second shade 22.

The operation lever 44 may be manually operated by, for example, removing the back cover 6 from the lamp body 2 and inserting the fingers into the lamp chamber 5.

When the operation lever 44 is operated to reach its lower moving end, the locking protrusion 45a of the link member 45 is inserted and held in the first locking hole 42c of the supporting wall 42 of the supporting member 40. On the other hand, when the operation lever 44 is operated to reach its upper moving end, the locking protrusion 45a is inserted and held in the second locking hole 42d.

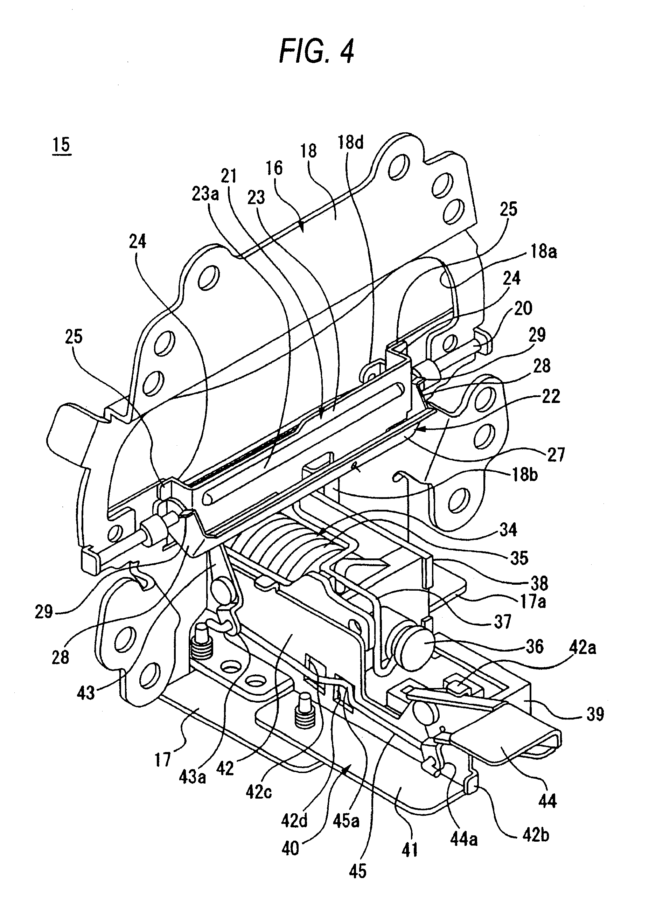

According to the vehicle headlamp 1 having the configuration described above, when the operation lever 44 is operated to reach the upper moving end, the second shade 22 is rotated against the biasing force of the second torsion coil spring 32, and is held in the second shielding position (see Figs. 4 to 7). While the second shade 22 is in the second shielding position, a right-hand traffic light distribution pattern, for example, is formed when the headlamp 1 is lit.

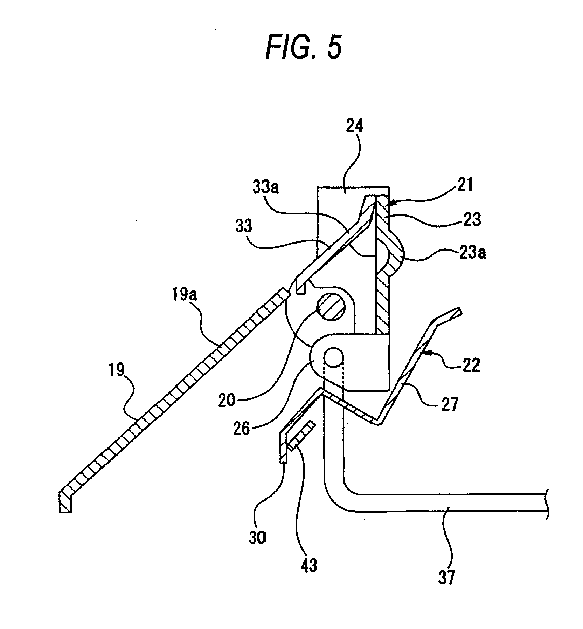

More specifically, when the electromagnetic coil 35 of the solenoid 34 is not energized while the second shade 22 is held in the second shielding position, the first shade 21 is held in the near zone irradiating position by the biasing force of the first torsion spring 31 (see Figs. 4 and 5), whereby a low beam light distribution pattern for the right-hand traffic is formed.

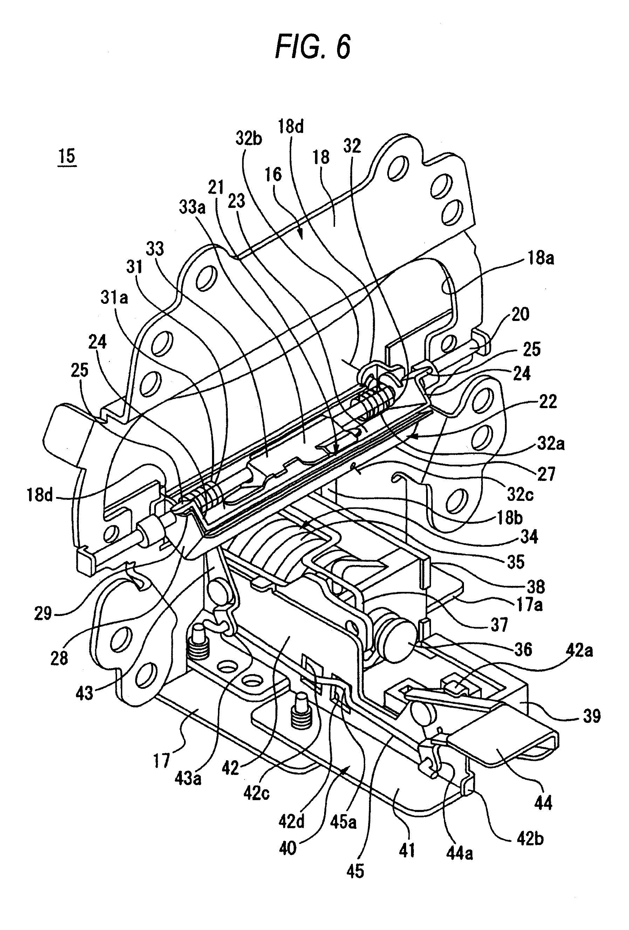

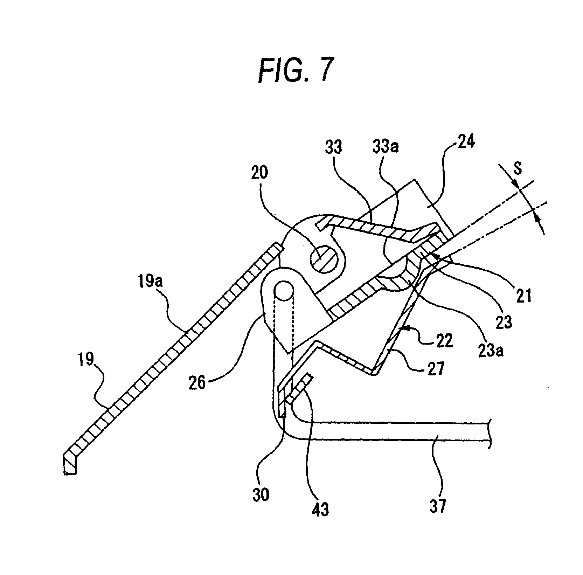

On the other hand, when the electromagnetic coil 35 of the solenoid 34 is energized while the second shade 22 is held in the second shielding position, the plunger 36 of the solenoid 34 is moved toward the front of the headlamp 1. Accordingly, the first shade 21 is rotated against the biasing force of the first torsion coil spring 31, and is held in the far zone irradiating position (see Figs. 6 and 7), whereby a high beam light distribution pattern is formed.

Here, when the first shade 21 is moved to the far zone irradiating position while the second shade 22 is in the second shielding position, the first shielding wall 23 of the first shade 21 is positioned to confront the second shielding wall 27 of the second shade 22 with a certain space S ensured therebetween as shown Fig. 7. Therefore, the first shielding wall 23 and the second shielding wall 27 are prevented from being damaged.

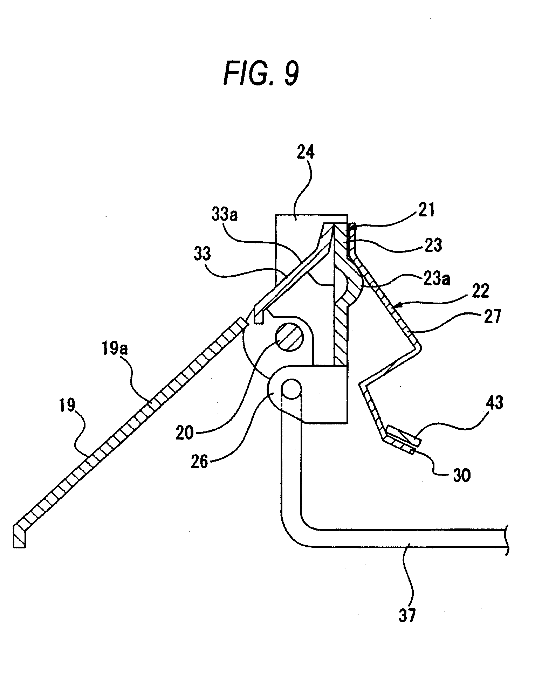

When the operation lever 44 is operated to reach the lower moving end, the second shade 22 is rotated by the biasing force of the second torsion coil spring 32, and held in the first shielding position (see Figs. 8 and 9). While the second shade 22 is held in the first shielding position, a light distribution pattern suitable for the left-hand traffic, for example, is formed when the headlamp 1 is lit.

More specifically, when the electromagnetic coil 35 of the solenoid 34 is not energized while the second shade 22 is held in the first shielding position, the first shade 21 is held in the near zone irradiating position by the biasing force of the first torsion coil spring 31 (see Figs. 8 and 9), whereby a low beam light distribution pattern suitable for the left-hand traffic is formed.

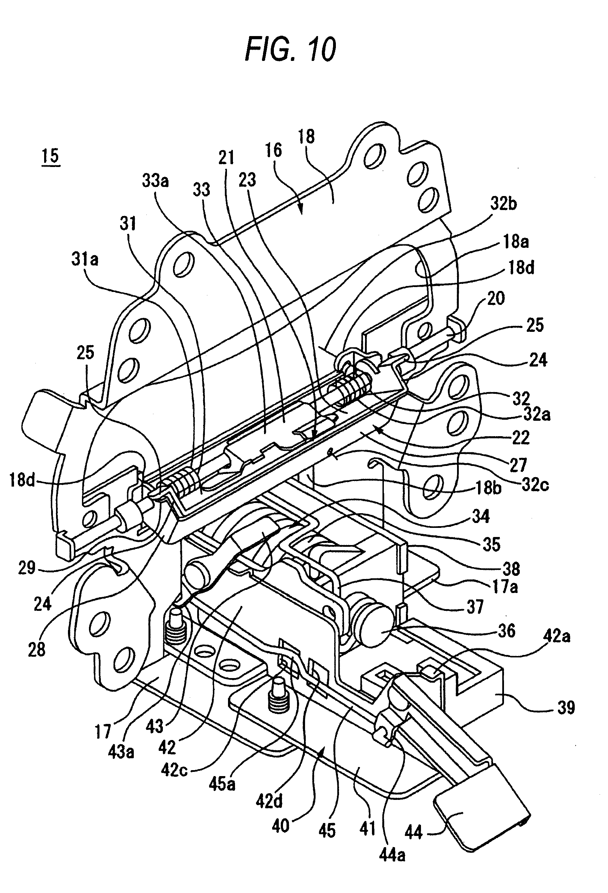

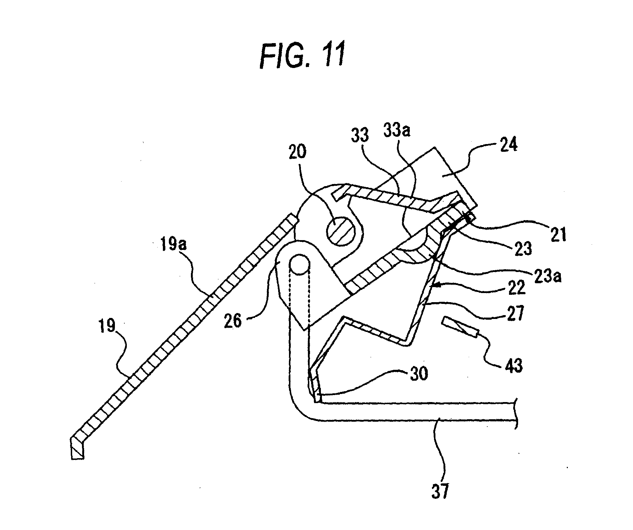

On the other hand, when the electromagnetic coil 35 of the solenoid 34 is energized while the second shade 22 is held in the first shielding position, the plunger 36 of the solenoid 34 is moved toward the front of the headlamp 1. Accordingly, the first shade 21 is rotated against the biasing force of the first torsion coil spring 31, and is held in the far zone irradiating position (see Figs. 10 and 11), whereby the high beam light distribution pattern is formed.

Here, when the first shade 21 is moved to the far zone irradiating position while the second shade 22 is in the first shielding position, the second shade 22 is rearwadly pushed by the pushing ridge 23a of the first shade 21. Therefore, the second shade 22 is rotated together with the first shade 21 against the biasing force of the second torsion coil spring 32, and is held in the second shielding position.

Further, when the energization of the electromagnetic coil 35 is stopped while the first shade 21 is in the far zone irradiating position and the second shade 22 in the second shielding position, the first shade 21 and the second shade 22 are rotated together by the first torsion coil spring 31 and the second torsion coil spring 32 to the near zone irradiating position and to the first shielding position, respectively (see Figs. 8 and 9).

Because the first shade 21 and the second shade 22 are biased in the same direction by the first torsion spring 31 and the second torsion coil spring 32, respectively, in the way described above, the first shade 21 and the second shade 22 are rotated together, and the rotating operations of the first shade 21 and the second shade 22 toward their respective positions can be facilitated.

According to the vehicle headlamp 1 of this exemplary embodiment, the first shade 21 and the second shade 22 are supported on the same support shaft 20, which is a single component, and are independently rotatable on the same support shaft 20. Therefore, the first shade 21 and the second shade 22 can be smoothly operated with a simplified configuration.

Further, when rotating the first shade 21 with the solenoid 34 while the second shade 22 is in the second shielding position, the second shade 22 does not become a load against the driving force of the solenoid 34 in addition to the first shade 21. That is, the first shade 21 can be rotated with a smaller driving force as compared with the conventional configuration. Therefore, it possible to downsize the solenoid 34, and to reduce power consumption.

Furthermore, the second shade 22 is rotated by pushing the engaging protrusion 30 with the operating member 43 in a direction opposite to the biasing direction in which the second shade 22 is biased by the second torsion spring 32. Therefore, the second shade 22 can be rotated with a simple configuration.

According to the vehicle headlamp 1 of this exemplary embodiment, moreover, the first torsion coil spring 31 and the second torsion coil spring 32 are disposed between the side walls 24 of the first shade 21 and in a location covered by the first shielding wall 23 of the first shade 21. That is, the first torsion coil spring 31 and the second torsion coil spring 32 are effectively arranged in a space saving manner. Therefore, it is possible to reduce the size of the headlamp 1.

While the present invention has been described with reference to a certain exemplary embodiment thereof, it will be understood by those skilled in the art that various changes and modifications may be made therein without departing from the scope of the present invention as defined by the appended claims.

For example, while the solenoid 34 is used as the first actuating means for operating the first shade 21 and the manual means including the operation lever 44 is used as the second actuating means for operating the second shade 22 in the exemplary embodiment described above, other various types of actuating means, electrically powered or manually operated, can be used as the first actuating means and the second actuating means.

That is, as shown in Fig. 11, the second actuating means may be configured such that a compact solenoid 46 is provided, and a driving force of the solenoid 46 is transmitted to the operating member 43 via the link member 45 to rotate the second shade 22.

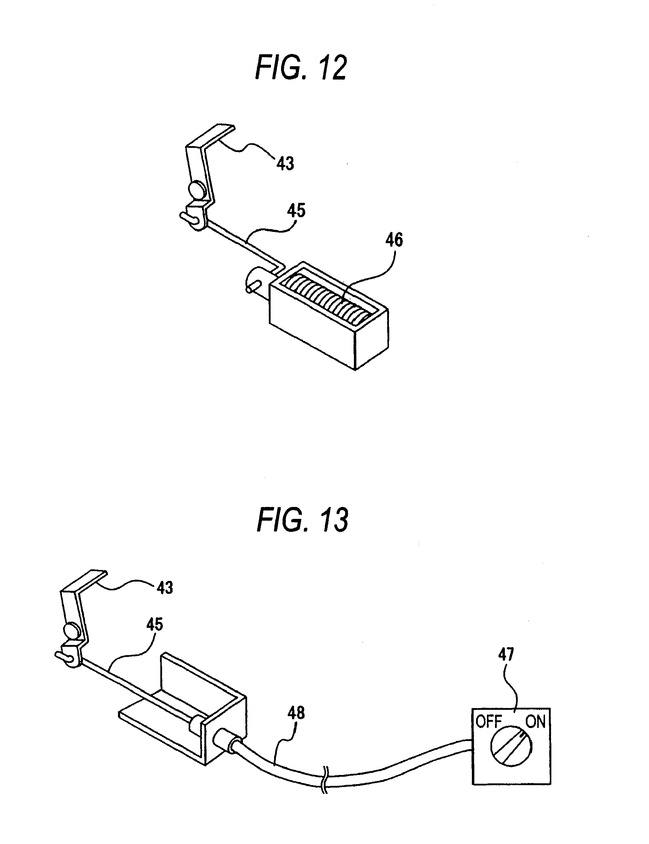

Alternatively, as shown in Fig. 12, an operation switch 47 may disposed outside the vehicle headlamp 1, e.g., in a passenger compartment of the vehicle, and the link member 45 may be coupled to the operation switch 47 via a wire 48, so that the operating member 43 is moved to rotate the second shade 22 by changing the tension of the wire 48 in accordance with the operation of the operating switch 47.

Further, while the operation lever 44 is disposed to extend in the front-rear direction so as to protrude out toward the rear of the lamp unit 7 through the arranging hole 7a in the exemplary embodiment described above, the operation lever 44 may be configured and disposed so as to extend in the up-down direction. In this case, operation holes may be formed through an upper end portion of the lamp body 2 and an upper end portion of the lamp unit 7 respectively, so that the operation lever 44 can be manually operated from above through the operation holes.

The shapes and configurations of the respective components of the headlamp I described above are merely examples in implementing the present invention. Therefore, it should be understood that the technical scope of the present invention is not limited to those examples.

## Claims

1. A vehicle headlamp (1) comprising:
a light source (11);
a projection lens (9) disposed in front of the light source (11) to forwardly project light emitted from the light source (11);
a reflector (10) which reflects the light emitted from the light source (11) toward the projection lens (9);
a first shade (21) comprising a first shielding wall (23) which partially shields the light emitted from the light source (11), wherein the first shade (21) is rotatable between a far zone irradiating position for irradiating a far zone and a near zone irradiating position for irradiating a near zone; and
a second shade (22) comprising a second shielding wall (27), wherein the second shade (22) is rotatable between a first shielding position and a second shielding position to partially shield the light emitted from the light source (11) in different ways with the second shielding wall (27),
**characterized in that** the vehicle headlamp (1) further comprises:
first actuating means (34) for rotating the first shade (21) between the far zone irradiating position and the near zone irradiating position;
second actuating means (43, 44, 45, 46, 47) for rotating the second shade (22) between the first shielding position and the second shielding position; and
a support shaft (20) on which the first shade (21) and the second shade (22) are rotatably supported,
wherein the first shade (21) and the second shade (22) are rotatable about the support shaft (20) independently from each other.

2. The vehicle headlamp (1) according to claim 1, further comprising:
first biasing means (31) for biasing the first shade (21) in a direction (P1) in which the first shade (21) is rotated from the far zone irradiating position to the near zone irradiating position; and
second biasing means (32) for biasing the second shade (22) in a direction (P1) in which the second shade (22) is rotated in the same direction (P1) as the direction (P1) in which the first shade (21) is biased,
wherein the second biasing means (32) biases the second shade (22) such that the second shade (22) contacts the first shade (21).

3. The vehicle headlamp (1) according to claim 2, wherein
the second shade (22) comprises an engaging protrusion (30), and
the second actuating means (43, 44, 45, 46, 47) comprises an operating member (43) which is operable to push the engaging protrusion (30) in a direction opposite to the direction (P1) in which the second shade (22) is biased.

4. The vehicle headlamp (1) according to claim 2 or 3, wherein
the first shade (21) further comprises a pair of side walls (24) which extend from respective sides of the first shielding wall (23) in a direction perpendicular to the first shielding wall (23) such that the side walls (24) are spaced apart from each other in an axial direction of the support shaft (20) and are supported by the support shaft (20),
the first biasing means (31) comprises a first torsion coil spring,
the second biasing means (32) comprises a second torsion coil spring, and
the first torsion coil spring (31) and the second torsion coil spring (32) are supported on the support shaft (20) between the side walls (24).

5. The vehicle headlamp (1) according to any one of claims 1 to 4, wherein, when the first shade (21) is rotated from the near zone irradiating position to the far zone irradiating position while the second shade (22) is in the second shielding position, the first shielding wall (23) of the first shade (21) and the second shielding wall (27) of the second shade (22) face each other with a space (S) provided therebetween.
